# EUROPEAN PATENT APPLICATION

(11) **EP 4 764 751 A1**
(43) Date of publication of application: **24.06.2026**
(21) Application number: 24221341.1
(22) Date of filing: 19.12.2024
(51) Int. Cl.: G05B 19/418

(54) **TECHNICAL MANAGEMENT SYSTEM FOR ORCHESTRATING A PLURALITY OF TECHNICAL COMPONENTS OF A TECHNICAL SYSTEM**

(71) Applicant: Siemens Aktiengesellschaft, 80333 München (DE)
(72) Inventor: Gruner, Tobias, 81675 München (DE); Mittermeier, Ludwig Andreas, 81541 München (DE)
(74) Representative: Siemens Patent Attorneys

(57) **Abstract**

The invention relates to technical management system (1) for orchestrating a plurality of technical components (12) of a technical system (10), wherein each technical component (12) of the plurality of technical components is a Hardware component or a Software component, wherein each technical component (12) of the plurality of technical components comprises at least one proactive part, wherein the plurality of technical components (12) interact with each other in the technical system, comprising: a. a runtime environment (14) for the proactive parts of the plurality of technical components (12); wherein the proactive parts of the plurality of technical components (12) are executed in the runtime environment (14); and b. an interface (16) for the proactive parts of the plurality of technical components (12); wherein the interface (16) is configured for establishing the execution of the proactive parts of the plurality of technical components (12) in the runtime environment (14).

Further, the invention relates to a corresponding runtime environment, a corresponding interface, a corresponding computer-implemented method and a corresponding computer program product.

## Description

### 1. Technical field

The present invention relates to a technical management system for orchestrating a plurality of technical components of a technical system. Further, the invention relates to a corresponding runtime environment, a corresponding interface, a corresponding computer-implemented method and a corresponding computer program product.

### 2. Prior art

Currently there is a trend of digitalization in the industry domain. Hence, e.g. a manufacturing process for a product may be digitally controlled. For describing several facets of this trend, the term "Industry 4.0" (in German: "Industrie 4.0") is a commonly used. It has become not only a major part of today's industry, but it also drives the business in many industrial domains.

Considering complex industrial plants, the industrial plants usually comprise distinct technical components or units with a multiplicity of individual functions. The technical components can be equally referred to as assets. Exemplary technical components with regard to such industrial plants include sensors, actuators, robots, conveyer belts, tool machines, and also products that are being produced (e.g. bottles, cars and screws). The technical components and their functions have to be controlled and regulated in an interacting manner. They are often monitored, controlled and regulated by an automation system. The increasing digitalization allows for manufacturing or industrial installation of products in a production line of the industrial plant to be performed by robot units or other autonomous units in an automatic manner and thus efficiently at least in part up to now.

The technical component can comprise at least one part. For example, the technical component comprises a reactive part. The technical component with the reactive part can be described by a description, such as a service meta model (e.g. Asset Administration Shell, Web of Things). This description can comprise static information .e.g. from the digital nameplate, technical data and/or documentation. The technical component with a proactive part comprises a specific functionality and can even establish a connection from the digital twin to the physical asset.

An exemplary technical component with a proactive part is a robot. The exemplary robot proactively informs other technical components when it needs maintenance, e.g. because its gripper is worn out. A further exemplary technical component with a proactive part is an AGV. The AGV can decide to interrupt its current transport task and drive to a special position for being repaired.

The technical components with the proactive parts are gaining in importance since safety-critical technical systems, such as the aforementioned industrial plants, can make autonomous decisions. As an example, the technical components need to react quickly to changing requirements in the industrial plants.

However, it remains a challenge to provide an approach for managing the technical components with the proactive parts in a technical system in a platform-independent and secure manner.

It is therefore an objective of the invention to provide a technical management system for orchestrating a plurality of technical components of a technical system, which is more efficient and reliable.

### 3. Summary of the invention

This problem is according to one aspect of the invention solved by a technical management system for orchestrating a plurality of technical components of a technical system, wherein each technical component of the plurality of technical components is a Hardware component or a Software component, wherein each technical component of the plurality of technical components comprises at least one proactive part, wherein the plurality of technical components interact with each other in the technical system, comprising:
a. a runtime environment for the proactive parts of the plurality of technical components; wherein
   the proactive parts of the plurality of technical components are executed in the runtime environment; and
b. an interface for the proactive parts of the plurality of technical components; wherein
   the interface is configured for establishing the execution of the proactive parts of the plurality of technical components in the runtime environment. Moreover, the interface can be configured for the definition of life cycle hooks, and/or the definition of input/output connectivity.

Accordingly, the invention is directed to a technical management system for orchestrating a plurality of technical components of a technical system. The term "orchestrating" can also be understood as managing. The technical system can be designed as any technical system, such as safety-critical system. Exemplary technical systems are industrial plants and autonomous vehicles. The technical system comprises technical components in the form of Hardware and/or Software components. Thereby, the technical component comprises one or more proactive parts. The proactive part can comprise a program or an application for the functionality of the technical component.

The technical management system comprises two components or units, namely the runtime environment and the interface.

Thereby, the term "runtime environment" can be interpreted in the common sense, according to which the runtime environment is the environment in which a program or an application is executed. In other words, the runtime environment specifies the hardware and the software infrastructure that supports the running of a particular codebase, which can be in real time. The proactive parts are executed in the runtime environment.

The interface is required for the execution of the proactive parts of the technical components in the runtime environment. The interface can also be used for describing the logic, defining life cycle hooks and/or accessing inputs and/or outputs. In other words, Input/Output functionalities can be encapsulated and provided by the runtime environment through the interface.

The present invention ensures the orchestration of the technical components with the proactive parts of the technical system in a platform-independent and reliable manner.

The technical management system for orchestrating the technical components allows for an improved efficiency.

This way, the technical components with the proactive parts in the technical system e.g. the industrial plant can be efficiently executed in a safe manner. Hence, the technical components with the proactive parts, contrary to prior art, can react quickly to changing requirements in the industrial plant. The technical components with the proactive parts can communicate, interact with each other, and make improved autonomous decisions.

In an aspect each technical component of the plurality of technical components can be described by a service meta model, has at least one specified function or at least one specified functionality and/or is configured to communicate and/or connect with the at least one other technical component, at least one technical system and/or at least one computing unit.

In a further aspect the at least one function can be specified using JavaScript Object Notation, JSON, functions, WebAssembly binaries and/or a standardized interface. Accordingly, functions differ in their complexity and range between simple and complex functions. Simple functions can be implemented using JSON-Function Description. More complex functions that go beyond the capabilities of JSON-Function Description can be implemented using WebAssembly binaries.

In a further aspect the runtime environment is defined as a WebAssembly. The WebAssembly allows for a platform-independent implementation.

In a further aspect a lifecycle of the proactive part of the technical component can be controlled by means of a lifecycle hook. Accordingly, the technical management system and/or the interface can be used for controlling the lifecycle of the proactive part through the lifecycle hook. The technical component with the proactive part can be executed at one or more pre-defined points in time in the lifecycle by means of the lifecycle hook. For example, if a connection to a computing unit or technical system needs to be established using a fieldbus protocol, this can be done in a "post start hook". The connection teardown can then be achieved in a "pre stop hook". The lifecycle hook allows for a modular separation of the parts of the technical component. A further advantage is that a user can add custom logic that can be executed to pre-defined applications.

In a further aspect the interface is configured for exchanging data between the proactive parts of the plurality of technical components and at least one other technical component, at least one technical system and/or at least one computing unit, preferably during runtime. Accordingly, the interface is not solely configured for execution, but also for transmitting and/or sharing data. The data can be exchanged between the proactive part of the technical component and the proactive part of another technical component or any other computing unit. Hence, the data is exchanged between the proactive parts of technical components. Additionally or alternatively, the data can be exchanged between the proactive part of the technical component and any other part of another technical component, such as reactive part or other computing unit. In other words, the proactive parts of the technical components can communicate and share data with any other computing units, within the technical system or outside the technical system.

For example, an industrial application that needs to exchange data with the proactive part of the technical component can do it directly or alternatively decoupled e.g. through an industrial message bus. The interaction between the proactive part and the message bus can be handled by the runtime environment. Information on which data is provided by a proactive application and which topic of the message bus should be used can be described in the reactive part of the service meta model.

In a further aspect the data between the proactive parts of the plurality of technical components and the at least one other technical component, the at least one technical system and/or the at least one computing unit is exchanged through a bus, preferably an industrial message bus.

In a further aspect the technical system is a safety-critical system, preferably an industrial plant.

In a further aspect each technical component of the plurality of technical components has an own computing resource and is configured for executing itself in the runtime environment. Accordingly, the technical components have their own computing resources and can be referred to as constrained devices. The technical components execute the runtime environment themselves. The advantage is that they act as servers for the reactive parts of the service meta model, but also execute proactive parts. This enables the direct interaction with the connected hardware and Input/Output logic.

In a further aspect the plurality of technical components is provided as a computing cluster and the computing cluster executes the runtime environment, wherein the computing cluster is preferably a Kubernetes cluster. Accordingly, in the case that the technical component does not have an integrated computing resource, the reactive and/or proactive parts can be served by a suitable computing cluster, such as Kubernetes cluster. The parts can be provided as workloads. The workloads can also be executed in the runtime environment. The workloads have proven to be advantageous in view of benefiting from the dynamic orchestration provided by Kubernetes and the sandbox features of the runtime environment.

A further aspect of the invention is a runtime environment for at least one proactive part of at least one technical component of a technical system; wherein the at least one proactive part of the at least one technical component is executed in the runtime environment.

A further aspect of the invention is an interface for at least one proactive part of at least one technical component of a technical system; wherein
the interface is configured for establishing an execution of the at least one proactive part of the at least one technical component in a runtime environment.

A further aspect of the invention is a computer-implemented method for orchestrating a plurality of technical components of a technical system, wherein
each technical component of the plurality of technical components is a Hardware component or a Software component, wherein
each technical component of the plurality of technical components comprises at least one proactive part, wherein
the plurality of technical components interact with each other in the technical system, comprising:
   a. providing a runtime environment;
   b. executing the proactive parts of the plurality of technical components in the runtime environment;
   c. Providing an interface for the proactive parts of the plurality of technical components; and
   d. establishing the execution of the proactive parts of the plurality of technical components in the runtime environment by means of the interface.

A further aspect of the invention is a computer program product directly loadable into an internal memory of a computer, comprising software code portions for performing the steps according to the aforementioned computer-implemented method when said computer program product is running on a computer.

### 4. Short description of the drawings

In the following detailed description, presently preferred embodiments of the invention are further described with reference to the following figures:
Fig. 1 shows a schematic diagram of the technical management system for orchestrating the plurality of technical components of the technical system according to an embodiment.
Fig. 2 illustrates a flowchart of the computer-implemented method for orchestrating the plurality of technical components of the technical system according to the invention.

### 5. Detailed description of preferred embodiments

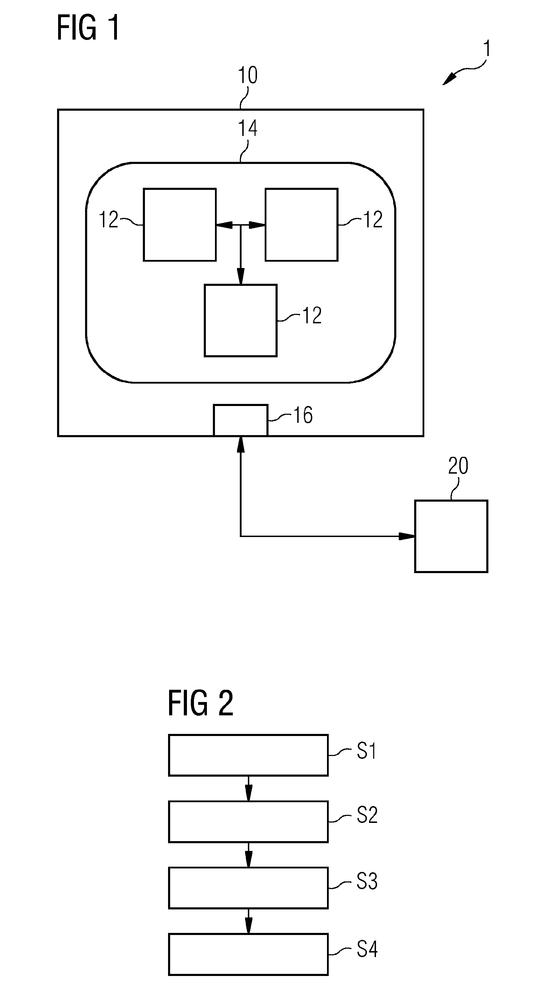

Figure 1 shows a schematic diagram of the technical management system 1 for orchestrating the plurality of technical components 12 of the technical system 10. The technical system 10 comprises one or more technical components 12, which interact with each other. The technical components 12 can also interact with any other computing units 20. The technical components 12 are orchestrated by the technical management system 1. Therefore, the technical management system 1 comprises the runtime environment 14 and the interface 16.

Figure 2 illustrates the flowchart of the computer-implemented method for orchestrating the plurality of technical components 12 of the technical system 10 according to the invention. In the first step the runtime environment 14 is provided S1. In the second step the proactive parts of the plurality of technical components 12 are executed in the runtime environment 14, S2. Then, the interface 16 is provided for the proactive parts of the plurality of technical components 12, S3. In the last step, the execution of the proactive parts of the plurality of technical components 12 is established in the runtime environment 14 by means of the interface 16, S4.

### Runtime environment 14

The reactive and proactive parts of a technical component can be described by a service meta model. This runtime environment 14 is provided for the proactive parts of the plurality of technical components 12. The proactive parts are executed in the runtime environment 14. The runtime environment can be described as a so-called sandbox. The runtime environment 14 ensures that the respective functionalities of the technical components are executed in a secure manner. For example, a technical component with a proactive part can only access the hardware resources for which it is authorized. Moreover, incoming and outgoing network connections can be controlled to ensure a secure communication between the technical components and other technical components or technical systems (e.g. Asset Discovery Service or Manufacturing Execution System).

### Interface 16

The interface 16 for the proactive parts of the plurality of technical components 12 is essential to enable the execution of the proactive parts of the plurality of technical components 12 in the runtime environment 14. Moreover, the interface 16 can describe the proactive parts of the technical components 12.

## Claims

1. Technical management system (1) for orchestrating a plurality of technical components (12) of a technical system (10), wherein
each technical component (12) of the plurality of technical components is a Hardware component or a Software component, wherein
each technical component (12) of the plurality of technical components comprises at least one proactive part, wherein
the plurality of technical components (12) interact with each other in the technical system, comprising:
a. a runtime environment (14) for the proactive parts of the plurality of technical components (12); wherein
the proactive parts of the plurality of technical components (12) are executed in the runtime environment (14); and
b. an interface (16) for the proactive parts of the plurality of technical components (12); wherein
the interface (16) is configured for establishing the execution of the proactive parts of the plurality of technical components (12) in the runtime environment (14).

2. Technical management system (1) according to claim 1, wherein each technical component (12) of the plurality of technical components can be described by a service meta model, has at least one specified function or at least one specified functionality and/or is configured to communicate and/or connect with the at least one other technical component (12), at least one technical system (10) and/or at least one computing unit (20).

3. Technical management system (1) according to claim 2, wherein the at least one function can be specified using JavaScript Object Notation, JSON, functions, WebAssembly binaries and/or a standardized interface.

4. Technical management system (1) according to any of the preceding claims, wherein the runtime environment (14) is defined as a WebAssembly.

5. Technical management system (1) according to any of the preceding claims, wherein a lifecycle of the proactive part of the technical component (12) can be controlled by means of a lifecycle hook.

6. Technical management system (1) according to any of the preceding claims, wherein the interface (16) is configured for exchanging data between the proactive parts of the plurality of technical components (12) and at least one other technical component (12), at least one technical system (10) and/or at least one computing unit, preferably during runtime.

7. Technical management system (1) according to claim 6, wherein the data between the proactive parts of the plurality of technical components (12) and the at least one other technical component (12), the at least one technical system (10) and/or the at least one computing unit is exchanged through a bus, preferably an industrial message bus.

8. Technical management system (1) according to any of the preceding claims, wherein the technical system (10) is a safety-critical system, preferably an industrial plant.

9. Technical management system (1) according to any of the preceding claims, wherein each technical component (12) of the plurality of technical components has an own computing resource and is configured for executing itself in the runtime environment (14).

10. Technical management system (1) according to any of the preceding claims, wherein the plurality of technical components (12) is provided as a computing cluster and the computing cluster executes the runtime environment (14), wherein the computing cluster is preferably a Kubernetes cluster.

11. A runtime environment (14) for at least one proactive part of at least one technical component (12) of a technical system (10); wherein
the at least one proactive part of the at least one technical component (12) is executed in the runtime environment (14).

12. Interface (16) for at least one proactive part of at least one technical component (12) of a technical system (10); wherein
the interface is configured (16) for establishing an execution of the at least one proactive part of the at least one technical component (12) in a runtime environment (14).

13. Computer-implemented method for orchestrating a plurality of technical components (12) of a technical system (10), wherein
each technical component (12) of the plurality of technical components is a Hardware component or a Software component, wherein
each technical component (12) of the plurality of technical components comprises at least one proactive part, wherein
the plurality of technical components (12) interact with each other in the technical system (10), comprising:
a. providing a runtime environment (14) (S1);
b. executing the proactive parts of the plurality of technical components (12) in the runtime environment (14) (S2);
c. Providing an interface (16) for the proactive parts of the plurality of technical components (12) (S3); and
d. establishing the execution of the proactive parts of the plurality of technical components (12) in the runtime environment (16) by means of the interface (14) (S4).

14. A computer program product directly loadable into an internal memory of a computer, comprising software code portions for performing the steps according to claim 13 when said computer program product is running on a computer.
